(19) Europäisches Patentamt / European Patent Office / Office européen des brevets

(11) **EP 3 048 791 B1**

(12) **FASCICULE DE BREVET EUROPEEN**

(45) Date de publication et mention
de la délivrance du brevet:
**25.09.2019 Bulletin 2019/39**

(51) Int Cl.:
***G06T 19/00*** *(2011.01)*    ***G06T 15/20*** *(2011.01)*

(21) Numéro de dépôt: **16305070.1**

(22) Date de dépôt: **26.01.2016**

(54) **PROCÉDÉ D'AFFICHAGE D'AU MOINS UNE FENÊTRE D'UNE SCÈNE TRIDIMENSIONNELLE, PRODUIT PROGRAMME D'ORDINATEUR ET SYSTÈME D'AFFICHAGE ASSOCIÉS**

ANZEIGEVERFAHREN MINDESTENS EINES FENSTERS EINER 3D-SZENE, ENTSPRECHENDES COMPUTERPROGRAMMPRODUKT UND ENTSPRECHENDES ANZEIGESYSTEM

METHOD FOR DISPLAYING AT LEAST ONE WINDOW OF A THREE DIMENSIONAL SCENE, RELATED COMPUTER PROGRAM PRODUCT AND DISPLAY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.01.2015 FR 1500145**

(43) Date de publication de la demande:
**27.07.2016 Bulletin 2016/30**

(73) Titulaire: **THALES LAS FRANCE SAS**
**78990 Elancourt (FR)**

(72) Inventeurs:
 • **CHOPIN, Philippe**
  **91883 MASSY Cedex (FR)**
 • **PASQUEREAU, Hervé**
  **91883 MASSY Cedex (FR)**
 • **LEJEUNE, Sébastien**
  **91767 PALAISEAU CEDEX (FR)**

(74) Mandataire: **Lavoix**
 **2, place d'Estienne d'Orves**
 **75441 Paris Cedex 09 (FR)**

(56) Documents cités:
 **EP-A1- 2 093 999    US-A1- 2010 110 069**

 • LUCIANO SOARES ET AL: "Managing Information of CAD Projects in Virtual Environments", PROCEEDINGS OF THE XI SYMPOSIUM ON VIRTUAL AND AUGMENTED REALITY, 2009, 1 janvier 2009 (2009-01-01), pages 168-174, XP055236248,

 • SANCHEZ-REYES J ET AL: "Performing Euler angle rotations in cad systems", COMPUTER AIDED DESIGN, ELSEVIER PUBLISHERS BV., BARKING, GB, vol. 27, no. 12, 1 décembre 1995 (1995-12-01), page 941, XP004022747, ISSN: 0010-4485, DOI: 10.1016/0010-4485(95)00070-4

 • BRITTON WOLFE ET AL: "C2VE: A Software Platform for Evaluating the Use of 3D Vision Technology for C2 Operations", PROCEEDINGS OF THE 17TH INTERNATIONAL COMMAND AND CONTROL RESEARCH AND TECHNOLOGY SYMPOSIUM., 1 janvier 2012 (2012-01-01), pages 1-10, XP055237410,

 • "Use of Warfighting Symbols in Pseudo-Three-Dimensional Displays - APPENDIX F", Common Warfighting Symbology - MIL-STD-2525C, 17 novembre 2008 (2008-11-17), pages 1009-1025, XP055237416, Extrait de l'Internet: URL:www.dtic.mil/doctrine//doctrine/other/ms_2525c.pdf [extrait le 2015-12-18]

 • DANIEL TRINDADE ET AL: "LVRL: reducing the Gap between Immersive VR and Desktop Graphical Applictions", THE INTERNATIONAL JOURNAL OF VIRTUAL REALITY, vol. 12, no. 1, 1 janvier 2013 (2013-01-01), pages 3-14, XP055237406,

 • L. P. SOARES ET AL: "Designing a Highly Immersive Interactive Environment: The Virtual Mine", COMPUTER GRAPHICS FORUM, vol. 29, no. 6, 14 septembre 2010 (2010-09-14), pages 1756-1769, XP055237403, GB ISSN: 0167-7055, DOI: 10.1111/j.1467-8659.2010.01656.x

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La portée de la présente invention est définie par les revendications 1 à 10. Les exemples et variantes mentionnés dans la présente description qui ne sont pas couverts par lesdites revendications sont à considérer comme ne faisant pas partie de la présente invention.

La présente invention concerne un procédé d'affichage d'au moins une fenêtre d'une scène tridimensionnelle, la scène comportant au moins un objet propre à être sélectionné par un utilisateur.

L'invention concerne aussi un produit programme d'ordinateur comportant des instructions logicielles qui, lorsqu'elles sont mises en oeuvre par un ordinateur, mettent en oeuvre un tel procédé.

L'invention concerne également un système électronique d'affichage propre à mettre en oeuvre un tel procédé.

L'invention s'applique au domaine de l'affichage de scènes tridimensionnelles. Par « scène », il est entendu, au sens de la présente invention, une image ou une succession d'images dans le temps, représentant des objets sur un fond, par exemple un fond cartographique. En l'occurrence, le fond est un fond en trois dimensions. Les objets sont, par exemple, tridimensionnels.

L'invention s'applique, plus particulièrement, à l'affichage de fenêtres dans de telles scènes.

Par « fenêtre », il est entendu, au sens de la présente invention, un élément de la scène, présentant une surface destinée à l'affichage d'informations telles que du texte, des pictogrammes, etc.

Par exemple, dans le domaine de la Conception Assistée par Ordinateur (CAO), le document de Luciano Soares et al intitulé « Managing Information of CAD Projects in Virtual Environments » et le document de Britton Wolfe et al intitulé « C2VE: A Software Platform for Evaluating the Use of 3D Vision Technology for C2 Opérations » décrivent chacun un procédé d'affichage d'éléments d'une scène tridimensionnelle. En particulier, selon le procédé décrit dans le premier de ces deux documents, des fenêtres tridimensionnelles sont affichées dans la scène avec une orientation telle que leur contenu fasse toujours face à l'observateur.

Généralement, une compréhension rapide de la scène est nécessaire, par exemple dans le cas où la scène représente une situation opérationnelle requérant une prise rapide de décision(s) critique(s).

La compréhension de telles scènes est souvent permise par la lecture de données affichées sur des fenêtres de la scène. De telles fenêtres présentent une orientation fixe.

Dans le cas d'une scène tridimensionnelle, de telles fenêtres sont parfois difficilement lisibles par un utilisateur visualisant la scène. Ce manque de lisibilité nuit à la compréhension de la scène.

Le but de l'invention est alors de proposer un procédé d'affichage qui permet une meilleure lisibilité des fenêtres de la scène.

A cet effet, l'invention a pour objet un procédé d'affichage selon la revendication 1.

En effet, en orientant les fenêtres en fonction de la position du premier point prédéterminé, donc en fonction de la position de l'utilisateur, les fenêtres sont orientées de sorte qu'elles sont facilement lisibles par l'utilisateur, même lorsque l'utilisateur se déplace, et en faisant en outre dépendre l'orientation de chaque fenêtre uniquement de la position de l'utilisateur dans un plan horizontal du repère-écran, le lacet de la fenêtre varie en fonction de la position de l'utilisateur, tandis que les angles de roulis et de tangage sont fixes.

Suivant d'autres aspects avantageux de l'invention, le procédé est selon l'une quelconque des revendications 2 à 8.

L'invention a également pour objet un produit programme d'ordinateur selon la revendication 9.

En outre, l'invention a pour objet un système électronique d'affichage selon la revendication 10.

L'invention sera mieux comprise à l'aide de la description qui va suivre, donnée uniquement à titre d'exemple non limitatif et faite en se référant aux dessins annexés, sur lesquels :

- la figure 1 est une représentation schématique d'un système électronique d'affichage selon l'invention ;
- la figure 2 est une représentation schématique d'une image calculée par le système d'affichage de la figure 1 ;
- la figure 3 est une représentation schématique d'un calculateur du système de la figure 1 ; et
- la figure 4 est un organigramme d'un procédé d'affichage selon l'invention.

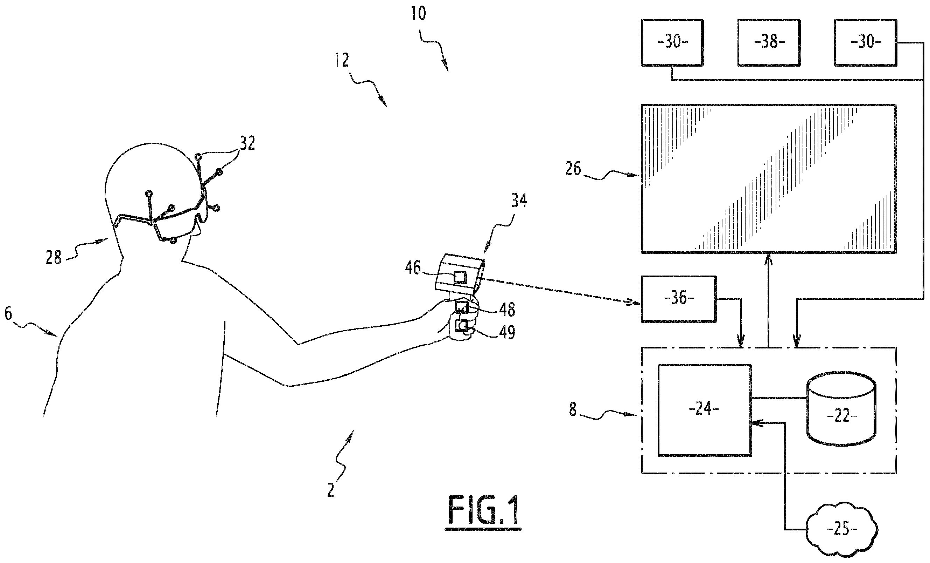

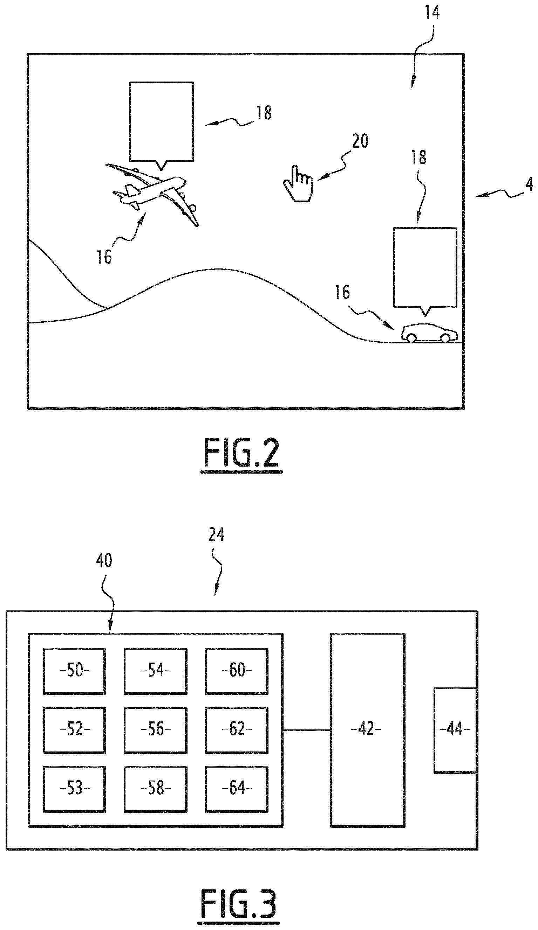

Un système électronique d'affichage 2 selon l'invention est représenté sur la figure 1. Le système électronique d'affichage 2 est configuré pour afficher une scène par exemple tridimensionnelle. La scène tridimensionnelle est formée par des images bidimensionnelles 4, dont un exemple est visible sur la figure 2, destinées à être visualisées par un utilisateur 6. Par exemple, et de façon classique, le système électronique d'affichage 2 est adapté pour afficher, simultanément ou alternativement, des images 4 destinées à être perçues par chacun des yeux de l'utilisateur 6 pour entraîner la perception d'une scène tridimensionnelle.

Le système électronique d'affichage 2 est également adapté pour afficher une succession d'images 4 au cours du temps, pour représenter l'évolution temporelle de la scène.

En outre, le système électronique d'affichage 2 est configuré pour calculer lesdites images 4 à afficher.

Le système électronique d'affichage 2 comporte une unité de calcul 8, une unité d'affichage 10 et une unité d'interaction 12.

Comme illustré par la figure 2, la scène représentée sur l'image 4 comporte un fond 14, des objets 16, des fenêtres 18 et un curseur 20.

Le fond 14 est une partie de la scène qui est fixe au cours du temps par rapport à un repère lié à la scène, encore appelé « repère-scène ». Le fond 14 est, par exemple, construit à partir d'images matricielles, d'images vectorielles ou encore de fichiers d'élévation terrain dans le cas de la représentation d'une zone géographique.

Le repère-scène est homothétique d'un repère invariant dans le temps par rapport à la scène, dit « repère de référence ». Le repère-scène et le repère de référence présentent, par exemple, la même origine, et leurs axes sont confondus.

Le rapport d'homothétie permettant le passage du repère-scène au repère de référence, encore appelé « facteur d'échelle », est noté $S_{com}$. Le facteur d'échelle $S_{com}$ est un nombre scalaire.

Les objets 16 sont des éléments de la scène qui sont susceptibles de se déplacer par rapport au fond 14. Chaque objet 16 est associé à un identifiant unique.

Par exemple, dans le cas de la représentation d'une scène correspondant à une situation opérationnelle associée de commandement et de contrôle militaire, de tels objets 16 sont des véhicules (aéronefs, navires, véhicules sous-marins, véhicules terrestres, etc.) ou encore des troupes.

Chaque objet 16 est géo-référencé, c'est-à-dire que la position de chaque objet 16 est repérée par trois coordonnées dans le repère de référence.

Chaque fenêtre 18 est associée à un objet 16. Chaque fenêtre 18 comporte une face avant 21.

Avantageusement, chaque fenêtre 18 comporte, sur sa face avant 21, des données relatives à l'objet 16 auquel ladite fenêtre 18 est associée. De telles données sont, par exemple, l'identifiant de l'objet 16, les coordonnées de l'objet 16 dans le repère-scène ou le repère de référence, la vitesse de l'objet 16, son cap, sa pente, une illustration de l'objet 16 de la scène, etc.

La position de chaque fenêtre 18 est repérée par trois coordonnées dans le repère de référence. Chaque fenêtre 18 est alors également géo-référencée.

Avantageusement, la fenêtre 18 présente au moins une coordonnée dont la valeur dépend de la valeur de la coordonnée correspondante de l'objet 16 auquel ladite fenêtre 18 est associée.

Par exemple, la fenêtre 18 présente au moins une coordonnée dont la valeur est égale à la valeur de la coordonnée correspondante de l'objet 16 associé.

Par exemple, deux coordonnées de la fenêtre 18 ont chacune la même valeur que les coordonnées correspondantes de l'objet 16 associé, et la troisième coordonnée de la fenêtre 18 a une valeur égale à la valeur de la coordonnée correspondante de l'objet 16 associé, à laquelle a été ajoutée une quantité prédéterminée, de sorte que, dans la scène, un objet 16 et la fenêtre 18 correspondante sont localisés à proximité l'un de l'autre.

Par exemple, les coordonnées de la fenêtre 18 sont telles que, du point de vue de l'utilisateur 6, dans la scène, la fenêtre 18 se situe au-dessus de l'objet 16 correspondante.

En outre, chaque fenêtre 18 est liée à un repère de fenêtre correspondant. Chaque fenêtre 18 présente une orientation définie par la direction d'un vecteur normal à la fenêtre 18.

La direction du vecteur normal à chaque fenêtre 18 est déterminée par la valeur de trois angles d'Euler formés respectivement entre les axes du repère de fenêtre et les axes du repère de référence. Les angles d'Euler sont encore appelés roulis, tangage et lacet.

Comme cela sera décrit ultérieurement, le curseur 20 est propre à être déplacé dans la scène par l'utilisateur 6, par exemple pour permettre à l'utilisateur 6 d'interagir avec des objets 16 de la scène affichée, par l'intermédiaire du curseur 20.

La position du curseur 20 est repérée par trois coordonnées dans le repère de référence.

L'unité de calcul 8 est reliée à l'unité d'affichage 10 et à l'unité d'interaction 12. L'unité de calcul 8 comporte une base de données 22 et un calculateur 24.

L'unité de calcul 8 est configurée pour calculer les images 4. L'unité de calcul 8 est également configurée pour transmettre les images 4 calculées à destination de l'unité d'affichage 10. En outre, l'unité de calcul 8 est configurée pour calculer les images 4 en fonction d'informations reçues en provenance de l'unité d'interaction 12.

L'unité d'affichage 10 est adaptée pour afficher, à destination de l'utilisateur 6, les images 4 calculées par l'unité de calcul 8.

L'unité d'affichage 10 comporte un afficheur 26 et des lunettes stéréoscopiques 28.

L'unité d'interaction 12 est adaptée pour détecter les mouvements de la tête l'utilisateur 6 et les actions de l'utilisateur 6 sur la scène affichée.

L'unité d'interaction 12 comporte au moins deux capteurs 30, au moins six marqueurs 32, un organe de pointage 34 et un récepteur 36.

La base de données 22 est adaptée pour stocker des données relatives aux images à afficher 4. Par exemple, la base de données 22 est propre à stocker des images ou des fichiers d'élévation terrain correspondant au fond 14 de la scène à afficher.

En outre, dans le cas de simulations de situations opérationnelles, par exemple, la base de données 22 est propre à stocker des informations relatives à des scénarios desdites simulations.

Le calculateur 24 est configuré pour lire les données stockées dans la base de données 22. Le calculateur 24 est également configuré pour recevoir des informations en provenance de l'unité d'interaction 12.

En outre, le calculateur 24 est, par exemple, propre à recevoir des informations en provenance de senseurs terrain d'une situation opérationnelle réelle (par exemple un théâtre d'opérations), également appelés capteurs terrain, lesdites informations étant, par exemple, transmises par le biais d'un réseau de télécommunications 25.

Le calculateur 24 est configuré pour calculer les images 4 en fonction de données stockées dans la base de données 22 et/ou des informations en provenance des senseurs terrain. En outre, le calculateur 24 est configuré pour calculer les images 4 en fonction d'informations en provenance de l'unité d'interaction 20.

Le calculateur 24 comprend une mémoire 40, un microprocesseur 42 et un émetteur-récepteur 44, comme représenté sur la figure 3. La mémoire 40 et le microprocesseur 42 forment une unité de traitement d'informations.

L'afficheur 26, visible sur la figure 1, est propre à afficher les images 4. L'afficheur 26 est, par exemple, un moniteur vidéo, un ensemble formé par un projecteur et un écran, ou encore une pluralité de moniteurs vidéos ou d'ensembles projecteur-écran.

Par exemple, l'afficheur 26 est propre à afficher alternativement des images 4 destinées à être perçues par chacun des yeux de l'utilisateur 6

Selon un autre exemple, l'afficheur 26 est propre à afficher simultanément des images 4 destinées à être perçues par chacun des yeux de l'utilisateur 6. Les images 4 associées à chacun des yeux de l'utilisateur 6 présentent alors, par exemple, des polarisations orthogonales.

L'afficheur 26 est fixe dans un repère, dit « repère-écran », qui est, par exemple, le référentiel terrestre.

Les lunettes 28 sont propres à permettre à l'utilisateur 6 de visualiser en trois dimensions la scène formée par les images 4 affichées par l'afficheur 26.

Dans le cas où l'afficheur 26 est propre à afficher alternativement des images 4 destinées à être perçues par chacun des yeux de l'utilisateur 6, les lunettes 28 sont, par exemple, configurées pour occulter alternativement la vision de chacun des deux yeux de l'utilisateur 6, et de façon synchronisée avec l'afficheur 26.

Dans le cas l'afficheur 26 est propre à afficher simultanément des images 4 destinées à être perçues par chacun des yeux de l'utilisateur 6, les lunettes 28 sont, par exemple, configurées pour filtrer, pour chaque oeil de l'utilisateur 6, les images 4 qui ne sont pas destinées à être perçues par ledit oeil.

Chaque capteur 30 présente un volume de détection correspondant. Par « volume de détection », il est entendu, au sens de la présente demande, une zone de l'espace, définie par rapport au capteur 30, dans laquelle le capteur 30 présente une sensibilité de détection supérieure à un seuil de détection prédéterminé.

Chaque capteur 30 est propre à acquérir, au cours du temps, des vues du volume de détection correspondant. Chaque capteur 30 est également propre à transmettre, à destination de l'unité de calcul 8, les vues acquises au cours du temps.

Les capteurs 30 sont, de préférence, des capteurs d'images ou encore des caméras, par exemple des caméras infrarouges.

Les capteurs 30 sont disposés de sorte que les volumes de détection associés à au moins deux capteurs 30 distincts présentent une zone de recouvrement commune. De préférence, la zone de recouvrement est située en regard de l'afficheur 26, par exemple en face de l'afficheur 26.

Les capteurs 30 sont, par exemple, agencés à proximité de l'afficheur 26.

De façon optionnelle, les capteurs 30 sont associés à des moyens d'éclairage 38 propres à émettre un rayonnement pour éclairer les éléments présents dans le volume de détection. Dans ce cas, le rayonnement lumineux émis par les moyens d'éclairage 38 présente une longueur d'onde susceptible d'être détectée par les capteurs 30.

Les marqueurs 32 sont fixes par rapport à l'utilisateur 6, de préférence par rapport à la tête de l'utilisateur 6. Les marqueurs 32 sont des marqueurs d'indication de la position de l'utilisateur 6, notamment de la position de la tête de l'utilisateur 6. Les marqueurs 32 sont détectables par les capteurs 30. Les marqueurs 32 sont, de préférence, visuels. Par exemple, les marqueurs 32 sont fixés aux lunettes 28, en des emplacements prédéterminés. La position des marqueurs 32 par rapport à un premier point prédéterminé est ainsi connue.

Avantageusement, la position du premier point prédéterminé est représentative de la position de la tête de l'utilisateur. Le premier point prédéterminé est, par exemple, un point des lunettes 28.

Par exemple, six marqueurs 32 sont fixés aux lunettes 28. Les marqueurs 32 sont agencés de sorte qu'aucun marqueur 32 ne soit aligné avec deux autres marqueurs 32.

Les marqueurs 32 sont propres à réfléchir et/ou diffuser le rayonnement détecté par les capteurs 30.

L'organe de pointage 34 comporte au moins un bouton 46, un module 48 de suivi du déplacement de l'organe de pointage 34 et un émetteur 49.

L'organe de pointage 34 est configuré pour permettre à l'utilisateur 6 de déplacer le curseur 20 dans la scène affichée.

En outre, l'organe de pointage 34 est configuré pour permettre à l'utilisateur 6 d'interagir avec la scène affichée, par exemple de désigner des objets 16 de la scène affichée, ou encore de déplacer ou d'orienter la scène.

En outre, l'organe de pointage 34 est propre à émettre, à destination du récepteur 36, un signal d'actionnement lorsque l'utilisateur 6 active l'un des boutons 46 de l'organe de pointage 34. Avantageusement, le signal d'actionnement comporte un identifiant unique du bouton 46 activé.

L'organe de pointage 34 est également propre à émettre, à destination du récepteur 36, une information relative au déplacement au cours du temps de l'organe de pointage 34.

Le récepteur 36 est propre à recevoir le signal d'actionnement en provenance de l'organe de pointage 34 et à transmettre ledit signal d'actionnement à l'unité de calcul 8, le récepteur 36 étant relié à l'unité de calcul 8.

Chaque bouton 46 est destiné à être actionné par l'utilisateur 6 pour déclencher une ou plusieurs action(s), par exemple la sélection d'un objet 16 de la scène, le déplacement de la scène ou encore la rotation de la scène.

Chaque bouton 46 est, de préférence, associé à un identifiant unique.

Le module de suivi 48 est propre à acquérir le déplacement de l'organe de pointage 34 au cours du temps. Dans ce cas, le module de suivi 48 comporte des capteurs de mouvement, propres à acquérir le déplacement de l'organe de pointage 34 au cours du temps.

Le module de suivi 48 comporte, par exemple, trois accéléromètres propres à acquérir des mouvements de translation de l'organe de pointage 34 suivant trois directions distinctes, de préférence trois directions non coplanaires.

En outre, le module de suivi 48 comporte, par exemple, trois gyromètres propres à acquérir des mouvements de rotation de l'organe de pointage autour de trois directions distinctes, de préférence trois directions non coplanaires.

L'émetteur 49 est propre à générer le signal d'actionnement. Le signal d'actionnement est notamment fonction des boutons 46 actionnés par l'utilisateur 6.

L'émetteur 49 est, en outre, propre à transmettre le signal d'actionnement au récepteur 36.

L'émetteur 49 est également propre à transmettre, à destination du récepteur 36, un signal comportant des informations relatives aux déplacements de l'organe de pointage 34 au cours du temps, acquis par le module de suivi 48.

Par exemple, l'émetteur 49 est propre à transmettre le signal d'actionnement et/ou le signal comportant des informations relatives aux déplacements de l'organe de pointage 34, à destination du récepteur 36, via une onde électromagnétique, par exemple une onde radioélectrique ou une onde optique. Dans ce cas, le récepteur 36 est propre à détecter l'onde électromagnétique émise par l'émetteur 49.

La mémoire 40 comporte un premier emplacement mémoire 50, un deuxième emplacement mémoire 52 de stockage d'informations de configuration, et un troisième emplacement mémoire 53 de stockage d'informations relatives à la position et à l'orientation des fenêtres 18, comme représenté sur la figure 3.

En outre, la mémoire 40 est propre à stocker un logiciel de traitement 54, un logiciel de localisation 56, un logiciel de gestion 58, un logiciel de sélection 60, un logiciel de lecture-écriture 62 et un logiciel de calcul 64.

Le microprocesseur 42 est propre à charger et à exécuter chacun des logiciels 54, 56, 58, 60, 62, 64.

L'émetteur-récepteur 44 est propre à recevoir des vues acquises par les capteurs 30. L'émetteur-récepteur 44 est également propre à recevoir, en provenance du récepteur 36, des informations relatives à l'actionnement du ou de chaque bouton 46.

L'émetteur-récepteur 44 est, en outre, propre à transmettre les images 4 calculées par l'unité de traitement d'informations à destination de l'afficheur 26.

Le premier emplacement mémoire 50 est propre à stocker des informations relatives aux relations entre le repère de référence, le repère-scène et le repère-écran.

De telles relations sont, par exemple, enregistrées sous forme matricielle.

Par exemple, le premier emplacement mémoire 50 stocke une matrice de navigation, notée $M_{\text{Nav}}$. La matrice de navigation $M_{\text{Nav}}$ est une matrice permettant le passage du repère-écran vers le repère-scène. La matrice de navigation $M_{\text{Nav}}$ s'écrit :

$$M_{\text{Nav}} = \begin{pmatrix} v_{11} & v_{21} & v_{31} & T_x \\ v_{12} & v_{22} & v_{32} & T_y \\ v_{13} & v_{23} & v_{33} & T_z \\ 0 & 0 & 0 & 1 \end{pmatrix} \tag{1}$$

Dans la matrice de navigation $M_{\text{Nav}}$, le vecteur $T = (T_x, T_y, T_z)^t$ représente la translation de l'origine du repère-scène par rapport à l'origine du repère-écran, l'écriture $A^t$ désignant la transposée d'une matrice $A$ quelconque.

En outre, la rotation du repère-scène par rapport au repère-écran est donnée par la matrice de rotation suivante :

$$v = \begin{pmatrix} v_{11} & v_{21} & v_{31} \\ v_{12} & v_{22} & v_{32} \\ v_{13} & v_{23} & v_{33} \end{pmatrix} \tag{2}$$

Les vecteurs $v_x = (v_{11}, v_{12}, v_{31})^t$, $v_y = (v_{21}, v_{22}, v_{23})^t$ et $v_z = (v_{31}, v_{32}, v_{33})^t$ représentent la rotation de chacun des axes du repère-scène par rapport aux axes du repère-écran.

Les vecteurs $v_x$, $v_y$ et $v_z$ ne sont généralement pas normalisés, de sorte que les normes euclidiennes $s_x = \|v_x\|$, $s_y = \|v_y\|$ et $s_z = \|v_z\|$ sont des facteurs d'échelle du repère-scène par rapport au repère-écran.

Les facteurs d'échelle $s_x$, $s_y$ et $s_z$ sont également stockés dans le premier emplacement mémoire 50.

En outre, une matrice des cosinus directeurs $M_{DC}$ est stockée dans le premier emplacement mémoire 50.

La matrice des cosinus directeurs $M_{DC}$ est définie comme :

$$M_{DC} = \begin{pmatrix} c_x & c_y & c_z \end{pmatrix} \tag{3}$$

où $c_x$, $c_y$ et $c_z$ sont les vecteurs définis par :

$$c_x = \frac{v_x}{s_x}, c_y = \frac{v_y}{s_y} \text{ et } c_z = \frac{v_z}{s_z} \tag{4}$$

La matrice des cosinus directeurs $M_{DC}$ est utilisée pour le calcul des angles d'Euler du repère-scène par rapport au repère-écran. Ce calcul est classiquement connu.

Le premier emplacement mémoire 50 stocke, en outre, le facteur d'échelle $S_{com}$ entre le repère-scène et le repère de référence. Le premier emplacement mémoire 50 stocke, en outre, la position au cours du temps des marqueurs 32 fixés aux lunettes 28, dans le repère de référence. Le premier emplacement mémoire 50 stocke, en outre, la position au cours du temps de l'organe de pointage 34 dans le repère de référence.

Le deuxième emplacement mémoire 52 est propre à stocker des informations de configuration du système d'affichage 2.

De telles informations de configuration comprennent, par exemple, des informations de configuration relatives à l'organe de pointage 34, des informations de configuration relatives aux marqueurs 32 fixés aux lunettes 28, ou encore des informations de configuration relatives à la disposition des capteurs 30 dans le repère-écran.

Par exemple, le deuxième emplacement mémoire 52 stocke les coordonnées, dans le repère-écran, de chacun des capteurs 30.

Par exemple, le deuxième emplacement mémoire 52 stocke une information relative à une correspondance entre un identifiant d'un bouton 46 de l'organe de pointage 34 et une action à réaliser lorsque ledit bouton 46 est actionné.

Le deuxième emplacement mémoire 52 stocke, en outre, la position relative des marqueurs 32 fixés aux lunettes 28 les uns par rapport aux autres. Le deuxième emplacement mémoire 52 stocke, en outre, la position relative du premier point prédéterminé par rapport aux marqueurs 32 fixés aux lunettes 28. Le deuxième emplacement mémoire 52 stocke, en outre, l'orientation d'un premier vecteur prédéterminé fixe par rapport aux marqueurs 32 qui sont fixés aux lunettes 28.

Le premier vecteur prédéterminé est, par exemple, choisi de sorte que, lorsque l'utilisateur revêt les lunettes 28 et se tient droit en position debout, le premier vecteur prédéterminé est sensiblement colinéaire à la direction verticale.

En outre, le deuxième emplacement mémoire 52 stocke, par exemple des informations de configuration des capteurs de mouvement du module 48 de suivi de la position de l'organe de pointage 34.

En outre, le deuxième emplacement mémoire 52 stocke, par exemple, un vecteur $W_{offset}$ représentant une translation, imposée par un administrateur lors de la configuration du système 2, entre la position du marqueur 42 de l'organe de pointage 34 dans le repère-scène et la position du curseur 20. Le vecteur $W_{offset}$ est avantageusement choisi de sorte que, dans la scène, le curseur 20 se trouve devant l'utilisateur 6, et non pas au niveau de l'organe de pointage 34. Par exemple, le vecteur $W_{offset}$ est choisi de sorte que, lorsque l'utilisateur 6 tient l'organe de pointage 34 dans sa main et l'oriente vers l'avant, l'utilisateur 6 voit le curseur 20 devant lui, à l'écart de l'organe de pointage 34, à la hauteur de l'organe de pointage 34, à une distance prédéterminée de l'organe de pointage 34.

Le troisième emplacement mémoire 53 est propre à stocker des informations relatives à la position et à l'orientation des fenêtres 18.

Par « orientation d'une fenêtre », on entend la direction d'un vecteur normal à ladite fenêtre 18. Par exemple, par « orientation d'une fenêtre », on entend l'orientation correspondant aux trois angles d'Euler formés respectivement entre les axes d'un repère lié à chaque fenêtre 18, dit « repère de fenêtre », et les axes du repère de référence.

L'orientation de chaque fenêtre 18 est, par exemple, stockée sous la forme d'un quaternion classiquement connu. Chaque quaternion est un vecteur comportant quatre composantes. Le calcul permettant le passage des composantes du quaternion aux angles d'Euler, et inversement, est classiquement connu.

En outre, le troisième emplacement mémoire 53 stocke, par exemple, les coordonnées de chaque fenêtre 18 dans le repère de référence.

Le logiciel de traitement 54 est configuré pour traiter les vues reçues en provenance des capteurs 30. En particulier, le logiciel de traitement 54 est propre à traiter les vues en provenance des capteurs 30 pour détecter, sur chaque vue, les marqueurs 32 fixés aux lunettes 28.

Le logiciel de localisation 56 est configuré pour calculer la position des marqueurs 32 dans le repère-écran. De préférence, le logiciel de localisation 56 est configuré pour calculer la position des marqueurs 32 à partir de la position des marqueurs 32 sur les vues traitées par le logiciel de traitement 54, et à partir de la position relative des marqueurs 32 stockée dans le deuxième emplacement mémoire 52. Avantageusement, le logiciel de localisation 56 est, en outre, configuré pour calculer la position des marqueurs 32 à partir de la position des capteurs 30, également stockée dans le deuxième emplacement mémoire 52. Par exemple, le logiciel de localisation 56 est également configuré pour calculer la position des marqueurs 32 partir de la matrice de navigation $M_{Nav}$ et du facteur d'échelle $S_{com}$ stockés dans le premier emplacement mémoire 50.

Le logiciel de localisation 56 est, en outre, configuré pour calculer la position des marqueurs 32 dans le repère de référence à partir de la position des marqueurs 32 dans le repère-écran.

La position de chaque marqueur 32 dans le repère de référence s'obtient par :

$$\begin{bmatrix} T_{\text{marq, com}} \\ 1 \end{bmatrix} = M_{\text{nav}} * \begin{bmatrix} T_{\text{marq, écran}} \\ 1 \end{bmatrix} * S_{\text{com}} \qquad (5)$$

où $T_{\text{marq,com}}$ est un vecteur à trois composantes, dont les composantes représentent les coordonnées d'un marqueur 32 dans le repère de référence, et

$T_{\text{marq,écran}}$ est un vecteur à trois composantes, dont les composantes représentent les coordonnées dudit marqueur 32 dans le repère-écran.

Le logiciel de localisation 56 est, en outre, configuré pour calculer la position de l'organe de pointage 34 dans le repère-écran à partir des informations reçues en provenance du module de suivi 48 et des informations de configuration stockées dans le deuxième emplacement mémoire 52.

Le logiciel de localisation 56 est, en outre, configuré pour calculer la position du curseur 20 dans le repère de référence, à partir de la position, dans le repère-écran, de l'organe de pointage 34.

Notamment, la position du curseur 20 dans le repère de référence s'obtient par :

$$\begin{bmatrix} T_{\text{curs, com}} \\ 1 \end{bmatrix} = M_{\text{nav}} * \begin{bmatrix} T_{\text{point, écran}} + W_{\text{offset}} \\ 1 \end{bmatrix} * S_{\text{com}} \qquad (6)$$

où $T_{\text{curs,com}}$ est un vecteur à trois composantes, lesdites composantes représentant les coordonnées du curseur 20 dans le repère de référence, et

$T_{\text{point,écran}}$ est un vecteur à trois composantes, dont les composantes représentent les coordonnées de l'organe de pointage 34 dans le repère-écran.

Le logiciel de localisation 56 est, en outre, configuré pour calculer la position du fond 8 et des objets 16 dans le repère de référence, à partir de leurs coordonnées dans un repère lié à la situation opérationnelle représentée, par exemple dans le système géodésique standard mondial WGS84 (de l'anglais « World Geodetic System 1984 », signifiant système géodésique mondial, révision de 1984).

Le logiciel de localisation 56 est en outre configuré pour transmettre les positions calculées vers le logiciel de lecture-écriture 62.

Puis le logiciel de lecture-écriture 62 est adapté pour écrire, dans le premier emplacement mémoire 50, les positions calculées du fond 8 et des objets 16.

Le logiciel de gestion 58 est propre à recevoir le signal d'actionnement émis par l'organe de pointage 34 et reçu par l'intermédiaire du récepteur 36.

Le logiciel de gestion 58 est en outre propre à déterminer le type de l'action associée au bouton 46 activé par l'utilisateur 6. Une telle action est, par exemple, une rotation de la scène, une translation de la scène ou encore un zoom dans la scène.

En outre, le logiciel de gestion 58 est propre à calculer une nouvelle matrice de navigation $M_{Nav}$ et un nouveau facteur d'échelle $S_{com}$ liés au zoom, à la rotation ou à la translation de la scène requis(e) par l'utilisateur 6.

Le logiciel de gestion 58 est, en outre, propre à transmettre, vers le logiciel de lecture-écriture 62, la nouvelle matrice de navigation $M_{Nav}$ et le nouveau facteur d'échelle $S_{com}$.

En outre, une telle action est, par exemple, la sélection d'un objet 16. Dans ce cas, le logiciel de gestion 58 est propre à transmettre une information relative à la sélection d'un objet 16 à destination du logiciel de sélection 60 pour entraîner la sélection de l'objet 16 adéquat.

Le logiciel de sélection 60 est propre à déterminer l'objet le plus proche du curseur 20, en fonction de la position courante du curseur 20.

Le logiciel de sélection 60 est, notamment, propre à calculer la distance entre le curseur 20 et chacun des objets 16 de la scène. Ladite distance est, par exemple, la distance euclidienne, dans le repère de référence, entre le curseur 20 et chacun des objets 16.

Le logiciel de sélection 60 est en outre propre à transmettre, à destination du logiciel de calcul 64, une information relative à l'identifiant de l'objet 16 sélectionné par l'utilisateur 6 par le biais du curseur 20.

Le logiciel de lecture-écriture 62 est propre à lire les données reçues en provenance du réseau de télécommunications 25 et les données stockées dans la base de données 22, le premier emplacement mémoire 50, le deuxième emplacement mémoire 52 et le troisième emplacement mémoire 53.

Le logiciel de lecture-écriture 62 est, en outre, propre à écrire des données dans le premier emplacement mémoire 50, le deuxième emplacement mémoire 52 et le troisième emplacement mémoire 53.

En particulier, le logiciel de lecture-écriture 62 est propre à écrire dans le premier emplacement mémoire 50 pour mettre à jour la matrice de navigation et/ou le facteur d'échelle avec la valeur reçue en provenance du logiciel de gestion 58.

Le logiciel de calcul 64 est propre à calculer les images 4 destinées à être affichées par l'unité d'affichage 10, en particulier par l'afficheur 26 de l'unité d'affichage 10.

En particulier, le logiciel de calcul 64 est propre à calculer les images 4 à partir des données lues par le logiciel de lecture-écrite 62.

Le logiciel de calcul 64 est, en outre, propre à calculer la position et l'orientation des fenêtres 18 associées à des objets 16 sélectionnés par l'utilisateur 6.

Comme cela a été décrit précédemment, la position de chaque fenêtre 18 dépend de la position de l'objet 16 correspondant.

En outre, l'orientation de chaque fenêtre 18 dépend de la position de l'utilisateur 6, c'est-à-dire de la position du premier point prédéterminé.

De plus, l'orientation de chaque fenêtre 18 dépend uniquement de la position de l'utilisateur 6 dans un plan horizontal du repère-écran. Plus précisément, le lacet de la fenêtre 18 varie en fonction de la position de l'utilisateur 6 dans un plan horizontal du repère-écran, les angles de roulis et de tangage étant fixes.

La valeur de l'angle de lacet Yaw(fenêtre) de la fenêtre 18 s'obtient par :

$$\text{Yaw(fenêtre)} = \text{mod}(\text{Yaw(head)} + \text{Yaw(Nav)}, 2\pi) \qquad (7)$$

où mod est l'opérateur « modulo »,
Yaw(Nav) est l'angle de lacet du repère-scène par rapport au repère-écran, obtenu à partir de la matrice des cosinus directeurs $M_{DC}$, et
Yaw(head) est un angle compris entre 0 et $2\pi$.

L'angle Yaw(head) est calculé de la façon suivante :

$$\text{Yaw(head)} = \text{atan2}\left(T_y(\text{head}), T_x(\text{head})\right) \qquad (8)$$

où atan2 est la fonction arctangente à deux arguments classiquement connue,
$T_x(\text{head})$ est l'abscisse du premier point prédéterminé dans le repère-écran, et
$T_y(\text{head})$ est l'ordonnée du premier point prédéterminé dans le repère-écran.

En variante, le tangage de la fenêtre 18 pourrait par exemple dépendre également de la position de l'utilisateur 6. Plus précisément, le tangage de la fenêtre 18 varie en fonction de la position de l'utilisateur 6 dans un plan vertical du repère-écran.

La valeur de l'angle de lacet Yaw(fenêtre) de la fenêtre 18 s'obtient par :

$$\text{Pitch(fenêtre)}=\text{mod}(\text{Pitch(head)}+\text{Pitch(Nav)}, 2\pi) \qquad (9)$$

où mod est l'opérateur « modulo »,
Pitch (Nav) est l'angle de tangage du repère-scène par rapport au repère-écran, obtenu à partir de la matrice de navigation $M_{\text{Nav}}$, et
Pitch(head) est un angle compris entre 0 et $2\pi$ calculé de la façon suivante :

$$\text{Yaw(head)}=\text{atan2}\left( T_z(\text{head}), \sqrt{T_x^2(\text{head}) + T_y^2(\text{head})} \right) \qquad (10)$$

où atan2 est la fonction arctangente à deux arguments classiquement connue,
$T_z$(head) est la cote du premier point prédéterminé dans le repère-écran.

Ainsi, un vecteur normal à la face avant 21 de la fenêtre 18 est toujours dirigé vers le premier point prédéterminé.

En variante, le roulis de la fenêtre 18 pourrait par exemple dépendre également de la position de l'utilisateur 6. En particulier, le roulis de la fenêtre 18 dépend de l'orientation du premier vecteur prédéterminé. Par exemple, l'angle de roulis de la fenêtre 18 est tel qu'un axe vertical de la fenêtre est, dans le repère de référence, colinéaire au premier vecteur prédéterminé.

En outre, le logiciel de calcul 64 est propre à calculer les images 4 en fonction de l'orientation de la tête de l'utilisateur, c'est-à-dire en fonction de l'orientation du premier vecteur prédéterminé.

En particulier, le logiciel de calcul 64 est propre à calculer les images 4 en considérant que l'axe optique de chacun des yeux l'utilisateur 6 appartient à un plan qui est fonction du premier vecteur prédéterminé, par exemple un plan orthogonal au premier vecteur prédéterminé.

Avantageusement, le logiciel de calcul 64 est également propre à calculer des données relatives à l'objet sélectionné en fonction des données lues par le logiciel de lecture-écriture 62.

En particulier, le logiciel de calcul 64 est propre à calculer, en fonction des coordonnées de l'objet 16 et des dates correspondantes, la vitesse de l'objet 16 dans le repère-scène, son cap, sa pente, sa longitude, sa latitude, sa altitude, etc. En outre, le logiciel de calcul 64 est propre à calculer des images 4 dans lesquelles les fenêtres 18 portent, sur leur face avant 21, l'identifiant de l'objet 16 correspondant, sa vitesse, son cap, sa pente, sa longitude, sa latitude, son altitude, etc.

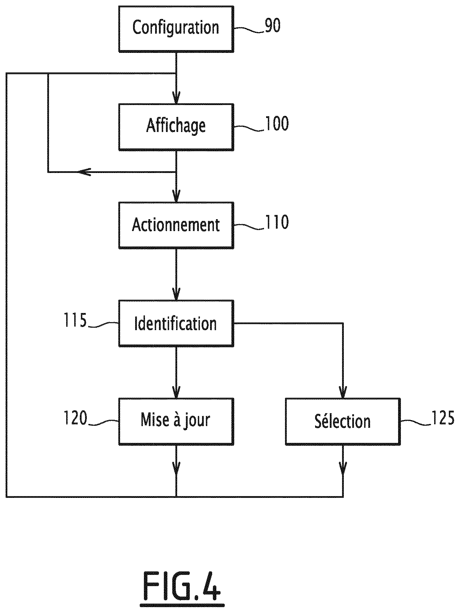

Le fonctionnement du système d'affichage 2 va maintenant être décrit, en référence à la figure 4, représentant un organigramme du procédé d'affichage selon l'invention.

Au cours d'une étape de configuration 90, un administrateur enregistre, dans le premier emplacement mémoire 50, une matrice de navigation $M_{\text{Nav}}$ initiale et un facteur d'échelle $S_{\text{com}}$ initial entre le repère-scène et le repère de référence.

L'administrateur enregistre également, dans le deuxième emplacement mémoire 52, les positions des capteurs 30, la correspondance entre un identifiant d'un bouton 46 de l'organe de pointage 34 et une action à réaliser lorsque ledit bouton 46 est actionné, le vecteur $W_{\text{offset}}$ représentatif de la translation entre la position du marqueur 42 de l'organe de pointage 34 dans le repère-scène et la position du curseur 20, la position relative des marqueurs 32 fixés aux lunettes 28 par rapport au premier point prédéterminé, et l'orientation du premier vecteur prédéterminé par rapport aux marqueurs 32 fixés aux lunettes 28.

Puis, un utilisateur 6 revêt les lunettes 28 et se positionne devant l'afficheur 26, avantageusement dans la zone de recouvrement des volumes de détection des capteurs 30.

Au cours d'une étape d'affichage 100, le logiciel de lecture-écriture 62 lit les données stockées dans le premier emplacement mémoire 50 et le deuxième emplacement mémoire 52, et les transmet au logiciel de localisation 56 et au logiciel de calcul 62.

Puis, le logiciel de localisation 56 calcule la position du premier point prédéterminé dans le repère de référence et transmet la position calculée au logiciel de lecture-écriture 62.

Puis, le logiciel de lecture-écriture 62 écrit, dans le premier emplacement mémoire 50, la position du premier point prédéterminé qui a été calculée.

En outre, le logiciel de localisation 56 calcule la position de l'organe de pointage 34 dans le repère de référence et transmet la position calculée au logiciel de lecture-écriture 62.

Puis le logiciel de lecture-écriture 62 écrit, dans le premier emplacement mémoire 50, la position de l'organe de pointage 34 dans le repère de référence.

En outre, au cours de l'étape d'affichage 100, le logiciel de calcul 64 calcule la position du fond 8 dans le repère de référence, en fonction de la matrice de navigation $M_{\text{Nav}}$ courante et du facteur d'échelle $S_{\text{com}}$ courant lus par le logiciel de lecture-écriture 62.

Le logiciel de calcul 64 calcule, en outre, la position des objets 16 à afficher dans le repère de référence, en fonction des informations stockées dans la base de données 22 et/ou en provenance du réseau de télécommunications 25, et en fonction de la matrice de navigation $M_{\text{Nav}}$ courante et du facteur d'échelle $S_{\text{com}}$ courant.

Le logiciel de calcul 64 calcule, en outre, la position et l'orientation des fenêtres 18, comme cela sera décrit ultérieurement. Le logiciel de calcul 64 transmet les positions et les orientations calculées des fenêtres 18 au logiciel de lecture-écriture 62.

Puis, le logiciel de lecture-écriture 62 écrit, dans le troisième emplacement mémoire 53, les positions et les orientations calculées des fenêtres 18.

Puis, le logiciel de calcul 64 calcule les images 4 permettant à l'utilisateur 6 de visualiser la scène en trois dimensions, en fonction de la position du premier point prédéterminé et de l'orientation du premier vecteur prédéterminé.

L'émetteur-récepteur 44 transmet ensuite les images calculées par le logiciel de calcul 64 à destination de l'afficheur 26.

L'étape d'affichage 100 est répétée cycliquement au cours du temps, à une fréquence de rafraîchissement prédéterminée, pour tenir compte des déplacements de l'utilisateur 6.

Si, au cours d'une étape d'actionnement 110, le logiciel de gestion 58 reçoit un signal d'actionnement émis par l'organe de pointage 34, alors, au cours d'une étape suivante d'identification 115, le logiciel de gestion 58 détermine l'action à accomplir.

Si, au cours de l'étape d'identification 115, le logiciel de gestion 58 détermine que l'action à réaliser est un zoom dans la scène, ou une rotation de la scène, ou encore une translation de la scène, alors, au cours d'une étape suivante de mise à jour 120, le logiciel de gestion 58 calcule la nouvelle matrice de navigation $M_{\text{Nav}}$ et le nouveau facteur d'échelle $S_{\text{com}}$, et les transmet au logiciel de lecture-écriture 62.

Puis, le logiciel de lecture-écriture 62 écrit, dans le premier emplacement mémoire 50, la nouvelle matrice de navigation $M_{\text{Nav}}$ et/ou le nouveau facteur d'échelle $S_{\text{com}}$.

L'étape suivant l'étape de mise à jour 120 est l'étape d'affichage 100, décrite précédemment.

Si, au cours de l'étape d'identification 115, le logiciel de gestion 58 détermine que l'action à réaliser est la sélection d'un ou de plusieurs objet(s), alors, au cours d'une étape suivante de sélection 125, le logiciel de gestion 58 transmet au logiciel de sélection 60 une information relative à la sélection d'un objet 16 correspondant.

Puis, le logiciel de sélection 60 calcule, dans le repère de référence, la distance entre le curseur 20 et les objets 16.

Le logiciel de sélection 60 détermine ensuite l'objet 16 le plus proche du curseur 20 lors de l'actionnement du bouton 46 correspondant.

Puis, le logiciel de sélection 60 transmet, à destination du logiciel de calcul 64, une information relative à l'identifiant de l'objet 16 sélectionné.

L'étape suivant l'étape de sélection 125 est l'étape d'affichage 100, décrite précédemment.

Lors d'une nouvelle itération, au cours de l'étape d'affichage 100, le logiciel de calcul 64 calcule de nouvelles images 4 comportant, pour chaque objet 16 sélectionné, une fenêtre 18 correspondante. La position et l'orientation de chaque fenêtre 18 est déterminée tel que décrit précédemment.

Selon une variante du système d'affichage 2 selon l'invention, l'unité d'affichage 10 comporte une pluralité d'afficheurs 26. Les afficheurs 26 sont alors, de préférence, disposés pour former des faces orthogonales adjacentes d'un parallélépipède.

En complément, l'unité d'interaction 12 comporte au moins trois marqueurs 32 fixés aux lunettes 28.

En variante, aucun marqueur 32 n'est fixé aux lunettes 28. Dans ce cas, un élément, non représenté, de suivi du déplacement des lunettes 28 est fixé aux lunettes 28. L'élément de suivi comporte, par exemple, trois accéléromètres propres à acquérir les translations des lunettes 28 suivant trois directions distinctes, de préférence trois directions non coplanaires. En outre, l'élément de suivi comporte, par exemple, trois gyromètres propres à acquérir les rotations des lunettes 28 autour de trois directions distinctes, de préférence trois directions non coplanaires.

L'élément de suivi est, en outre, propre à émettre, à destination du récepteur 36, des informations relatives à la translation et/ou à la rotation des lunettes 28 au cours du temps.

Les fenêtres 18 étant orientées en fonction de la position du premier point prédéterminé, donc en fonction de la position de l'utilisateur 6, par exemple en fonction de la position de la tête de l'utilisateur 6, les fenêtres 18 sont facilement lisibles par l'utilisateur 6, même lorsque l'utilisateur se déplace.

Les angles d'Euler de chaque fenêtre 18 étant fonction de la position du premier point prédéterminé, la lecture des informations portées par chaque fenêtre 18 est plus aisée.

En particulier, le fait que la valeur d'au moins un angle d'Euler de la fenêtre soit telle qu'un vecteur normal à la face avant est dirigé vers un point d'une droite passant par le premier point prédéterminé, la face avant étant orientée vers le premier point prédéterminé, permet d'avoir des fenêtres orientées en direction du premier point prédéterminé, c'est-à-dire vers l'utilisateur 6.

Plus particulièrement encore, le fait que la valeur des trois angles d'Euler est telle que le vecteur normal est dirigé vers le premier point prédéterminé, autorise une lecture des informations de chaque fenêtre 18 quelle que soit la position de l'utilisateur 6. En effet, le premier point prédéterminé étant, par exemple, un point des lunettes 28, chaque fenêtre 18 est en permanence orientée vers l'utilisateur 6, par exemple vers les yeux de l'utilisateur 6. En particulier, chaque fenêtre 18 est orientée vers le premier point prédéterminé tout au long d'un déplacement de l'utilisateur. Les informations de chaque fenêtre 18 sont donc lisibles quelle que soit la position de l'utilisateur 6.

La sélection de l'objet 16 qui est le plus proche du curseur 20 rend le processus de désignation et de sélection d'un objet 16 plus aisé. En effet, il n'est pas nécessaire de placer précisément le curseur 20 sur l'objet 16 à sélectionner.

Le suivi des marqueurs 32 permet une détermination précise du premier point prédéterminé.

En outre, le calcul des images en fonction de l'orientation du premier vecteur prédéterminé tient compte de l'orientation de la tête de l'utilisateur, ce qui améliore la perception de la scène tridimensionnelle et réduit les effets indésirables qui sont parfois associés à la visualisation de scènes tridimensionnelles, tels que des maux de tête, une fatigue oculaire, des vertiges, etc.

L'affichage des données relatives aux objets 16 sur la face avant 21 des fenêtres 18 facilite ainsi la compréhension de la scène.

## Revendications

1. Procédé d'affichage d'au moins une fenêtre (18) d'une scène tridimensionnelle, la scène comportant au moins un objet (16) propre à être sélectionné par un utilisateur (6), le procédé étant mis en oeuvre par ordinateur et comportant les étapes suivantes :

   - détection (115) d'une sélection d'au moins un objet (16) par l'utilisateur (6) ;
   - détermination (125) de la position d'un premier point prédéterminé, fixe par rapport à l'utilisateur (6), dans un repère prédéterminé de référence ;
   - affichage (100) dans la scène, pour chaque objet (16) sélectionné, d'une fenêtre (18) correspondante, la fenêtre (18) présentant une orientation définie par la direction d'un vecteur normal à la fenêtre (18), ladite direction variant en fonction de la position du premier point prédéterminé selon au moins un axe du repère de référence,

   chaque objet (16) étant un élément de la scène qui est susceptible de se déplacer par rapport à un fond (14), le fond (14) étant une partie de la scène qui est fixe au cours du temps par rapport à un repère lié à la scène, ledit procédé étant **caractérisé par**
   chaque fenêtre (18) étant liée à un repère de fenêtre correspondant, la direction du vecteur normal à chaque fenêtre (18) étant déterminée par la valeur de trois angles d'Euler formés respectivement entre les axes du repère de fenêtre et les axes du repère de référence, l'affichage de chaque fenêtre (18) comprenant l'affectation à au moins un angle d'Euler de ladite fenêtre (18) d'une valeur qui est fonction de la position du premier point prédéterminé selon au moins un axe du repère de référence,
   la fenêtre comportant une face avant (21), la valeur d'au moins un angle d'Euler de la fenêtre (18) étant telle que le vecteur normal à ladite fenêtre (18) est dirigé vers un point d'une droite passant par le premier point prédéterminé, la face avant (21) étant orientée vers le premier point prédéterminé, la droite passant par le premier point prédéterminé étant parallèle à une direction verticale prédéterminée, l'orientation de chaque fenêtre (18) dépendant uniquement de la position de l'utilisateur (6) dans un plan horizontal d'un repère-écran.

2. -Procédé selon la revendication 1 dans lequel l'étape de détection (115) comporte :

   - la réception d'une commande de sélection ;
   - la détermination de la position d'un organe de pointage (34) propre à être actionné par l'utilisateur (6) ;
   - le calcul, en fonction de la position de l'organe de pointage (34), de la position dans le repère de référence d'un curseur (20) associé à l'organe de pointage (34) ;
   - le calcul de la position des objets (16) de la scène ; et
   - la sélection de l'objet (16) le plus proche du curseur (20) suivant une mesure de distance prédéterminée.

3. Procédé selon la revendication 1 ou 2, dans lequel l'étape de détermination (125) comprend :

- le suivi, au cours du temps, de la position d'au moins six marqueurs (32), fixes les uns par rapport aux autres et par rapport au premier point prédéterminé ;
- le calcul de la position du premier point prédéterminé en fonction de la position de chaque marqueur (32).

4. Procédé selon la revendication 3, dans lequel le suivi de la position des marqueurs comporte :

- la réception de vues acquises par au moins deux capteurs (30), chaque capteur (30) présentant un volume de détection correspondant, chaque capteur (30) étant propre à acquérir, au cours du temps, des vues du volume de détection correspondant ;
- la détection des marqueurs (32) dans les vues reçues ;
- le calcul de la position au cours du temps de chaque marqueur (32) détecté.

5. Procédé selon la revendication 3 ou 4, dans lequel le calcul de la position du premier point prédéterminé comporte en outre le calcul, en fonction de la position des marqueurs (32), de l'orientation d'un vecteur fixe par rapport aux marqueurs (32).

6. Procédé selon la revendication 5, dans lequel la scène est formée par des images (4), le procédé comprenant le calcul des images (4) en fonction de l'orientation de l'axe optique de chacun des yeux d'un utilisateur (6), les axes optiques des yeux de l'utilisateur (6) appartenant à un plan dépendant d'un premier vecteur prédéterminé qui est fixe par rapport aux marqueurs (32).

7. Procédé selon l'une quelconque des revendications 1 à 6, dans lequel l'étape d'affichage (100) comporte, pour chaque objet (16) sélectionné :

- la réception d'un vecteur d'état relatif à l'objet (16) sélectionné ;
- l'affichage, sur la face avant (21) de la fenêtre (18) correspondante, d'informations qui sont fonction d'au moins une composante du vecteur d'état.

8. Procédé selon la revendication 7, dans lequel le vecteur d'état comporte un identifiant de l'objet (16), des coordonnées d'une position de l'objet (16) à une date correspondante, et ladite date.

9. -Produit programme d'ordinateur comportant des instructions logicielles qui, lorsqu'elles sont mises en oeuvre par un ordinateur, mettent en oeuvre le procédé selon l'une quelconque des revendications 1 à 8.

10. -Système électronique (2) d'affichage d'au moins une fenêtre (18) d'une scène tridimensionnelle, la scène comportant au moins un objet (16) propre à être sélectionné par un utilisateur (6), le système (2) comportant

- une unité d'interaction (12) propre à détecter une sélection d'au moins un objet (16) par l'utilisateur (6) ;
- une unité de calcul (8) propre à déterminer la position d'un premier point prédéterminé, fixe par rapport à l'utilisateur (6), dans un repère prédéterminé de référence ;
- une unité d'affichage (10) propre à afficher dans la scène, pour chaque objet (16) sélectionné, une fenêtre (18) correspondante, la fenêtre (18) présentant une orientation définie par la direction d'un vecteur normal à la fenêtre (18), ladite direction variant en fonction de la position du premier point prédéterminé selon au moins un axe du repère de référence

chaque objet (16) étant un élément de la scène qui est susceptible de se déplacer par rapport à un fond (14), le fond (14) étant une partie de la scène qui est fixe au cours du temps par rapport à un repère lié à la scène, le système étant **caractérisé par**
chaque fenêtre (18) étant liée à un repère de fenêtre correspondant, la direction du vecteur normal à chaque fenêtre (18) étant déterminée par la valeur de trois angles d'Euler formés respectivement entre les axes du repère de fenêtre et les axes du repère de référence, l'affichage de chaque fenêtre (18) comprenant l'affectation à au moins un angle d'Euler de ladite fenêtre (18) d'une valeur qui est fonction de la position du premier point prédéterminé selon au moins un axe du repère de référence,
la fenêtre comportant une face avant (21), la valeur d'au moins un angle d'Euler de la fenêtre (18) étant telle que le vecteur normal à ladite fenêtre (18) est dirigé vers un point d'une droite passant par le premier point prédéterminé, la face avant (21) étant orientée vers le premier point prédéterminé, la droite passant par le premier point prédéterminé étant parallèle à une direction verticale prédéterminée, l'orientation de chaque fenêtre (18) dépendant uniquement de la position de l'utilisateur (6) dans un plan horizontal d'un repère-écran.

**Patentansprüche**

1. Verfahren zur Anzeige von mindestens einem Fenster (18) einer dreidimensionalen Szene, wobei die Szene mindestens ein Objekt (16) aufweist, welches dazu geeignet ist, durch einen Nutzer (6) ausgewählt zu werden, wobei das Verfahren durch einen Computer ausgeführt wird und die folgenden Schritte aufweist:

   - Erfassen (115) einer Auswahl mindestens eines Objekts (16) durch den Nutzer (6),
   - Ermitteln (125) der Position eines ersten vorbestimmten Punkts, welcher bezüglich des Nutzers (16) fest ist, in einem vorbestimmten Bezugskoordinatensystem,
   - Anzeigen (100), für jedes ausgewählte Objekt (16), eines zugehörigen Fensters (18) in der Szene, wobei das Fenster (18) eine Ausrichtung aufweist, welche durch die Richtung eines Normalenvektors zu jedem Fenster (18) definiert ist, wobei die Richtung in Abhängigkeit von der Position des ersten vorbestimmten Punkts entlang mindestens einer Achse des Bezugskoordinatensystems variiert,

   wobei jedes Objekt (16) ein Element der Szene ist, welches bezüglich eines Hintergrunds (14) beweglich ist, wobei der Hintergrund (14) ein Teil der Szene ist, welcher im Zeitverlauf bezüglich eines mit der Szene verbundenen Koordinatensystems fest ist,
   wobei das Verfahren **dadurch gekennzeichnet ist, dass**
   jedes Fenster (18) mit einem zugehörigen Fenster-Koordinatensystem verbunden ist, wobei die Richtung des Normalenvektors zu jedem Fenster (18) bestimmt ist durch den Wert von drei Eulerwinkeln, welche jeweilig zwischen den Achsen des Fenster-Koordinatensystems und den Achsen des Bezugskoordinatensystems ausgebildet sind, wobei die Anzeige jedes Fensters (18) die Zuordnung eines Wert, welcher eine Funktion der Position des ersten vorbestimmten Punkts entlang mindestens einer Achse des Bezugskoordinatensystems ist, zu mindestens einem Eulerwinkel des besagten Fensters (18) aufweist,
   wobei das Fenster eine Frontfläche (21) aufweist, wobei der Wert von mindestens einem Eulerwinkel des Fensters (18) derart ist, dass der Normalenvektor zu dem Fenster (18) zu einem Punkt einer Geraden hin gerichtet ist, welche durch den ersten vorbestimmten Punkt verläuft, wobei die Frontfläche (21) hin zu dem ersten vorbestimmten Punkt ausgerichtet ist, wobei die Gerade, welche durch den ersten vorbestimmten Punkt verläuft, parallel zu einer vorbestimmten Vertikalrichtung ist, wobei die Ausrichtung jedes Fensters (18) allein von der Position des Nutzers (6) in einer horizontalen Ebene eines Bildschirm-Koordinatensystems abhängt.

2. Verfahren nach dem Anspruch 1, wobei der Schritt des Erfassens (115) aufweist:

   - das Empfangen eines Auswahlbefehls,
   - das Ermitteln der Position eines Zeigerorgans (34), welches dazu geeignet ist, durch den Nutzer (6) betätigt zu werden,
   - das Berechnen der Position eines Eingabezeigers (20), welcher mit dem Zeigerorgan (34) in Verbindung steht, in dem Bezugskoordinatensystem in Abhängigkeit von der Position des Zeigerorgans (34),
   - das Berechnen der Position des Objekts (16) der Szene, und
   - das Auswählen des Objekts (16), welches nach einer vorbestimmten Abstandsmessung am nächsten zum Eingabezeiger (20) liegt.

3. Verfahren nach dem Anspruch 1 oder 2, wobei der Schritt des Ermittelns (125) aufweist:

   - das Überwachen, im Zeitverlauf, der Position von mindestens sechs Markierungen (32), welche bezüglich einander und bezüglich des ersten vorbestimmten Punkts fest sind,
   - das Berechnen der Position des ersten vorbestimmten Punkts in Abhängigkeit von der Position jeder Markierung (32).

4. Verfahren nach dem Anspruch 3, wobei das Überwachen der Position der Markierungen aufweist:

   - das Empfangen von Ansichten, welche durch mindestens zwei Sensoren (30) erlangt werden, wobei jeder Sensor (30) einen zugehörige Erfassungsraum aufweist, wobei jeder Sensor (30) dazu geeignet ist, die Ansichten des zugehörigen Erfassungsraums im Zeitverlauf zu erlangen,
   - das Detektieren der Markierungen (32) in den empfangenen Ansichten,
   - das Berechnen der Position im Zeitverlauf jeder detektierten Markierung (32).

5. Verfahren nach dem Anspruch 3 oder 4, wobei das Berechnen der Position des ersten vorbestimmten Punkts ferner das Berechnen der Ausrichtung eines Vektors, welcher in Bezug auf die Markierungen (32) fest ist, in Abhängigkeit von der Position der Markierungen (32) aufweist.

6. Verfahren nach dem Anspruch 5, wobei die Szene aus Bildern (4) gebildet ist, wobei das Verfahren das Berechnen der Bilder (4) in Abhängigkeit von der Ausrichtung der optischen Achse eines jeden von den Augen des Nutzers (6) aufweist, wobei die optischen Achsen der Augen des Nutzers (6) zu einer Ebene, welche von einem ersten vorbestimmten Vektor, der bezüglich der Markierungen (32) fest ist, abhängt, gehören.

7. Verfahren nach irgendeinem der Ansprüche 1 bis 6, wobei der Schritt des Anzeigens (100) für jedes ausgewählte Objekt (16) aufweist:

   - das Empfangen eines Zustandsvektors hinsichtlich eines ausgewählten Objekts (16),
   - das Anzeigen von Informationen, welche von mindestens einer Komponente des Zustandsvektors abhängig sind, auf der Frontfläche (21) des zugehörigen Fensters (18).

8. Verfahren nach dem Anspruch 7, wobei der Zustandsvektor einen Identifikator des Objekts (16), Koordinaten einer Position des Objekts (16) zu einem korrespondierenden Datum und das besagte Datum aufweist.

9. Computerprogrammprodukt, welches logische Befehle aufweist, die, wenn sie durch einen Computer ausgeführt werden, das Verfahren gemäß irgendeinem der Ansprüche 1 bis 8 ausführen.

10. Elektronisches System (2) zur Anzeige von mindestens einem Fenster (18) einer dreidimensionalen Szene, wobei die Szene mindestens ein Objekt (16) aufweist, welches dazu geeignet ist, durch einen Nutzer (6) ausgewählt zu werden, wobei das System (2) aufweist:

   - eine Interaktionseinheit (12), welche dazu geeignet ist, eine Auswahl von mindestens einem Objekt (16) durch den Nutzer (6) zu erfassen,
   - eine Berechnungseinheit (8), welche dazu geeignet ist, die Position eines ersten vorbestimmten Punkts, welcher bezüglich eines Nutzers (6) fest ist, in einem vorbestimmten Bezugskoordinatensystem zu ermitteln,
   - eine Anzeigeeinheit (10), welche dazu geeignet ist, in der Szene für jedes ausgewählte Objekt (16) ein zugehöriges Fenster (18) anzuzeigen, wobei das Fenster (18) eine Ausrichtung aufweist, welche durch die Richtung eines Normalenvektors zu jedem Fenster (18) definiert ist, wobei die Richtung in Abhängigkeit von der Position des ersten vorbestimmten Punkts entlang mindestens einer Achse des Bezugskoordinatensystems variiert,

   wobei jedes Objekt (16) ein Element der Szene ist, welches bezüglich eines Hintergrunds (14) beweglich ist, wobei der Hintergrund (14) ein Teil der Szene ist, welcher im Zeitverlauf bezüglich eines mit der Szene verbundenen Koordinatensystems fest ist,
   wobei das System **dadurch gekennzeichnet ist, dass**
   jedes Fenster (18) mit einem zugehörigen Fenster-Koordinatensystem verbunden ist, wobei die Richtung des Normalenvektors zu jedem Fenster (18) bestimmt ist durch den Wert von drei Eulerwinkeln, welche jeweilig zwischen den Achsen des Fenster-Koordinatensystems und den Achsen des Bezugskoordinatensystems ausgebildet sind, wobei die Anzeige jedes Fensters (18) die Zuordnung eines Wert, welcher eine Funktion der Position des ersten vorbestimmten Punkts entlang mindestens einer Achse des Bezugskoordinatensystems ist, zu mindestens einem Eulerwinkel des besagten Fensters (18) aufweist,
   wobei das Fenster eine Frontfläche (21) aufweist, wobei der Wert von mindestens einem Eulerwinkel des Fensters (18) derart ist, dass der Normalenvektor zu dem Fenster (18) zu einem Punkt einer Geraden hin gerichtet ist, welche durch den ersten vorbestimmten Punkt verläuft, wobei die Frontfläche (21) hin zu dem ersten vorbestimmten Punkt ausgerichtet ist, wobei die Gerade, welche durch den ersten vorbestimmten Punkt verläuft, parallel zu einer vorbestimmten Vertikalrichtung ist, wobei die Ausrichtung jedes Fensters (18) allein von der Position des Nutzers (6) in einer horizontalen Ebene eines Bildschirm-Koordinatensystems abhängt.

**Claims**

1. Method for displaying at least one window (18) of a three-dimensional scene, the scene including at least one object (16) capable of being selected by a user (6), the method being carried out by computer and comprising the following steps:

- detection (115) of a selection of at least one object (16) by the user (6);
- determination (125) of the position of a first predetermined point, fixed relative to the user (6), in a predetermined reference frame;
- display (100) in the scene, for each selected object (116), of a corresponding window (18), the window (18) having an orientation defined by the direction of a vector normal to the window (18), said direction varying as a function of the position of the first predetermined point along at least one axis of the reference frame,

each object (16) being an element of the scene which is capable of moving relative to a background (14), the background (14) being part of the scene that is fixed in time relative to a reference point associated with the scene, said method being **characterised by** each window (18) being associated with a corresponding window reference point, the direction of the vector normal to each window (18) being determined by the value of three Euler angles formed between the axes of the window reference point and the axes of the reference frame, the display of each window (18) comprising the allocation to at least one Euler angle of said window (18) of a value which is a function of the position of the first predetermined point along at least one axis of the reference frame,

the window comprising a front face (21), the value of at least one Euler angle of the window (18) being such that the vector normal to said window (18) is directed towards a point of a straight line passing through the first predetermined point, the front face (21) being oriented towards the first predetermined point, the straight line passing through the first predetermined point being parallel to a predetermined vertical direction, the orientation of each window (18) depending solely on the position of the user (6) in a horizontal plane of a screen reference point.

2. Method according to claim 1, wherein the detection step (115) comprises:

- the receiving of a selection command;
- the determination of the position of a pointing device (34) capable of being operated by the user (6);
- the calculation, as a function of the position of the pointing device (34), of the position in the reference frame of a cursor (20) associated with the pointing device (34);
- the calculation of the position of the objects (16) of the scene; and
- the selection of the object (16) that is closest to the cursor (20) according to a predetermined distance measurement.

3. Method according to claim 1 or 2, wherein the determination step (125) comprises:

- the tracking, over time, of the position of at least six markers (32) which are fixed relative to one another and relative to the first predetermined point;
- the calculation of the position of the first predetermined point as a function of the position of each marker (32).

4. Method according to claim 3, wherein the tracking of the position of the markers comprises:

- the receiving of views acquired by at least two sensors (30), each sensor (30) having a corresponding detection volume, each sensor (30) being capable of acquiring, over time, views of the corresponding detection volume;
- the detection of the markers (32) in the received views;
- the calculation of the position over time of each detected marker (32).

5. Method according to claim 3 or 4, wherein the calculation of the position of the first predetermined point further comprises the calculation, as a function of the position of the markers (32), of the orientation of a vector fixed relative to the markers (32).

6. Method according to claim 5, wherein the scene is formed by images (4), the method comprising the calculation of the images (4) as a function of the orientation of the optical axis of each of the eyes of a user (6), the optical axes of the eyes of the user (6) belonging to a plane which is dependent on a first predetermined vector which is fixed relative to the markers (32).

7. Method according to any one of claims 1 to 6, wherein the display step (100) comprises, for each selected object (16):

- the receiving of a state vector relating to the selected object (16);
- the display, on the front face (21) of the corresponding window (18), of information which is a function of at least one component of the state vector.

8. Method according to claim 7, wherein the state vector comprises an identifier of the object (16), coordinates of a position of the object (16) at a corresponding date, and said date.

9. Computer program product comprising software instructions which, when they are carried out by a computer, carry out the method according to any one of claims 1 to 8.

10. Electronic system (2) for displaying at least one window (18) of a three-dimensional scene, the scene including at least one object (16) capable of being selected by a user (6), the system (2) comprising:

   - an interaction unit (12) capable of detecting a selection of at least one object (16) by the user (6);
   - a computing unit (8) capable of determining the position of a first predetermined point, fixed relative to the user (6), in a predetermined reference frame;
   - a display unit (10) capable of displaying in the scene, for each selected object (16), a corresponding window (18), the window (18) having an orientation defined by the direction of a vector normal to the window (18), said direction varying as a function of the position of the first predetermined point along at least one axis of the reference frame,

   each object (16) being an element of the scene which is capable of moving relative to a background (14), the background (14) being part of the scene that is fixed over time relative to a reference point associated with the scene, the system being **characterised by** each window (18) being associated with a corresponding window reference point, the direction of the vector normal to each window (18) being determined by the value of three Euler angles formed between the axes of the window reference point and the axes of the reference frame, the display of each window (18) comprising the allocation to at least one Euler angle of said window (18) of a value which is a function of the position of the first predetermined point along at least one axis of the reference frame, the window comprising a front face (21), the value of at least one Euler angle of the window (18) being such that the vector normal to said window (18) is directed towards a point of a straight line passing through the first predetermined point, the front face (21) being oriented towards the first predetermined point, the straight line passing through the first predetermined point being parallel to a predetermined vertical direction, the orientation of each window (18) depending solely on the position of the user (6) in a horizontal plane of a screen reference point.

**FIG.1**

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LUCIANO SOARES et al.** *Managing Information of CAD Projects in Virtual Environments*
- **BRITTON WOLFE et al.** *C2VE: A Software Platform for Evaluating the Use of 3D Vision Technology for C2 Opérations*
- signifiant système géodésique mondial. *World Geodetic System 1984,* 1984